# EUROPÄISCHE PATENTSCHRIFT

(11) **EP 2 235 404 B1**
(45) Veröffentlichungstag und Bekanntmachung des Hinweises auf die Patenterteilung: **01.08.2012**
(21) Anmeldenummer: 08871916.6
(22) Anmeldetag: 05.12.2008
(51) Int. Cl.: F16H 63/48, B60T 1/00

(54) **NOTENTRIEGELUNGSEINRICHTUNG FÜR PARKSPERRE**
EMERGENCY UNLOCKING DEVICE FOR A PARKING LOCK
DISPOSITIF DE DÉVERROUILLAGE D'URGENCE POUR FREIN DE STATIONNEMENT

(30) Priorität: 28.01.2008 DE 102008006398
(43) Veröffentlichungstag der Anmeldung: 06.10.2010
(73) Patentinhaber: ZF Friedrichshafen AG, 88038 Friedrichshafen (DE)
(72) Erfinder: GIEFER, Andreas, 49448 Lemförde (DE); RAKE, Ludger, 49356 Diepholz (DE)
(86) Internationale Anmeldenummer: PCT/DE2008/050039
(87) Internationale Veröffentlichungsnummer: WO 2009/094969

(56) Entgegenhaltungen:
- EP-A- 1 111 275
- DE-A1- 19 837 832
- DE-A1-102005 024 468
- US-A- 2 860 731

## Beschreibung

Die Erfindung betrifft eine Notentriegelungseinrichtung zur manuellen Betätigung der Parksperre eines Gangwechselgetriebes, beispielsweise eines Getriebeautomaten mit shift-by-wire-Betätigung, gemäß dem Oberbegriff des Patentanspruchs 1.

Parksperren werden immer dann eingesetzt, wenn bei der Antriebskraftübertragung im Kraftfahrzeug nicht-mechanische Komponenten Verwendung finden, insbesondere bei automatischen Getrieben mit hydrodynamischem Drehmomentwandler. Auf diese Weise können die Antriebsräder trotz der nicht-mechanischen Verbindung zwischen dem Antriebsstrang und dem Motor des Kraftfahrzeugs verriegelt und unbeabsichtigtes Wegrollen des Fahrzeugs kann unterbunden werden. Hierzu blockiert die Parksperre infolge eines durch den Fahrer eingeleiteten Betätigungssignals die drehfest mit den Antriebsrädern verbundene Getriebeabtriebswelle, zumeist indem eine im Getriebeautomaten angeordnete Sperrklinke mit der Verzahnung eines auf der Getriebeabtriebswelle angeordneten Parksperrenrades in Eingriff gebracht wird.

Als Übertragungseinrichtung zwischen der Parksperre und der in der Fahrgastzelle des Kraftfahrzeuges angeordneten Betätigungsvorrichtung für das Fahrzeuggetriebe sind prinzipiell diverse mechanische, elektrohydraulische wie auch elektromechanische Systeme bekannt. Um die konstruktiven Gestaltungsmöglichkeiten bezüglich der freien Anordnung der Betätigungsvorrichtung in der Fahrgastzelle zu verbessern, und um zudem auch eine akustische Entkopplung der Betätigungsvorrichtung vom Antriebsstrang des Kraftfahrzeuges zu gewährleisten, wird bei modernen Kraftfahrzeugen bzw. Getriebeautomaten zunehmend zum shift-by-wire Prinzip übergegangen, zumal auch moderne Getriebeautomaten zunehmend vollelektronisch gesteuert werden.

Bei derartigen "shift-by-wire"-Getrieben erfolgt die Übertragung der Schaltbefehle von der Betätigungseinrichtung bzw. vom Wählhebel des Getriebeautomaten im Regelfall ausschließlich mittels elektrischer oder elektronischer Signale. Bezüglich der Parksperre bedeutet dies, dass auch die Betätigung der Parksperre auf elektrischem bzw. elektronischem Weg erfolgt, unter Umständen sogar automatisch, beispielsweise im Fall von Auto-P, sprich im Fall des selbsttätigen Einlegens der Parksperre beim Abziehen des Zündschlüssels bzw. Verlassen des Kraftfahrzeugs.

Dabei besteht jedoch die zusätzliche Anforderung, die Parksperre auch beim Ausfall elektronischer Systeme oder beim Ausfall der elektrischen Spannungsversorgung des Kraftfahrzeugs mittels einer Notentriegelung wieder ausrücken zu können, um das Fahrzeug auch in solchen Fällen noch bewegen zu können. Dies kommt beispielsweise in Betracht beim Werkstattaufenthalt des Fahrzeugs oder auch beim Abschleppen im Fall eines Defekts.

Hierzu sind shift-by-wire-Betätigungseinrichtungen für Getriebeautomaten bekannt, bei denen eine für den Notbetrieb vorgesehene, zusätzliche mechanische Verbindung zwischen dem Wählhebel - bzw. zwischen einer eigenständigen Notentriegelungsbetätigung - und dem Getriebe vorhanden ist, beispielsweise ein Seilzug. Auf diese Weise kann die Parksperre auch beim vollständigen Ausfall der elektrischen Systeme - nach entsprechender Betätigung der Notentriegelung - mechanisch über den Seilzug geöffnet (und auch wieder geschlossen) werden, so dass das Fahrzeug in jedem Fall bewegt werden kann.

Derartige mechanische Verbindungen oder Seilzüge zur Notbetätigung der Parksperre sind üblicherweise am Getriebe über einen Schwenkhebel mit einer Schaltwelle des Getriebes verbunden, so dass die - im Regelfall nur durch die Getriebehydraulik bewegte - Schaltwelle bei einem Ausfall der Stromversorgung oder der Getriebesteuerung im Sinne des Notbetriebs auch per Seilzug und Schwenkhebel bewegt und die Parksperre somit manuell deaktiviert werden kann.

Im Normalbetrieb tritt dabei jedoch das Problem auf, dass die Getriebeschaltwelle und der damit verbundene Notentriegelungs-Schwenkhebel bei Schaltvorgängen des Getriebeautomaten durch die Getriebehydraulik jeweils mitbewegt werden, wodurch auch die mechanische Notentriegelungs-Übertragungsvorrichtung zwischen Getriebe und Notentriegelungsbetätigung - also beispielsweise der Seilzug - jeweils mitbewegt würde. Dies ist jedoch unerwünscht, da hierdurch störende Geräusche in der Notentriegelungs-Übertragungsvorrichtung entstehen, ebenso wie dies zu einer unnötigen Abnutzung der Übertragungsvorrichtung führen kann.

Aus dem gattungsbildenden Dokument EP 1 111 275 A1 ist eine Fahrstufenwähleinrichtung mit Notentriegelung für die Parksperrenentriegelung bekannt, bei welcher der zur Notentriegelung verwendete Seilzug lediglich lose mittels eines auf dem Seilzug angeordneten Anschlagnippels mit dem Schwenkhebel der Getriebeschaltwelle verbunden ist, ansonsten jedoch frei entlang einer spaltförmigen Ausnehmung des Schwenkhebels gleiten kann.

Auf diese Weise erfolgt eine Kraftübertragung lediglich im Notbetätigungsfall vom Seilzug auf den Schwenkhebel, nicht aber umgekehrt vom Schwenkhebel auf den Seilzug, wenn der Schwenkhebel - im Normalbetrieb des Kraftfahrzeugs - durch die Getriebehydraulik bewegt wird.

Diese aus dem Stand der Technik bekannte Lehre ist jedoch potentiell zunächst einmal anfällig gegen Korrosion im Bereich der offenliegenden, losen Verbindung zwischen dem Seilzugende und dem Schwenkhebel. Ferner können gerade aufgrund des losen Seilzugendes wieder unerwünschte Geräusche entstehen, die sodann über den Seilzug in den Fahrzeuginnenraum übertragen werden können. Zudem ist bei dieser bekannten Lehre eine zusätzliche Federvorrichtung auf dem Seilzug erforderlich, um den Seilzug straff zu halten, während die Getriebehydraulik den Schwenkhebel hin und herbewegt. Auch diese zusätzliche Federvorrichtung ist aufwändig und muss zudem wieder vor Korrosion und Verschmutzung geschützt werden. Aufgrund der nur losen Verbindung zwischen dem Seilzugende und dem Schwenkhebel kann es bei dieser bekannten Notentriegelungseinrichtung zudem zu Fehljustagen bei der Montage kommen, beispielsweise dann, wenn bei der Montage die frei überstehende Länge des Seilzugs falsch bemessen wird.

Mit diesem Hintergrund ist es Aufgabe der vorliegenden Erfindung, eine Notentriegelungseinrichtung zur manuellen Betätigung der Parksperre eines shift-by-wire-Gangwechselgetriebes zu schaffen, mit der sich die genannten Nachteile des Standes der Technik überwinden lassen. Die Notentriegelungseinrichtung soll dabei insbesondere zuverlässig und kostengünstig sein und Vorteile insbesondere bezüglich einer geringeren Geräuschentwicklung, eines verbesserten Korrosionsschutzes sowie bezüglich einer erleichterten und weniger fehleranfälligen Montage und Justage der Übertragungseinrichtung aufweisen.

Diese Aufgabe wird durch eine Notentriegelungseinrichtung mit den Merkmalen des Patentanspruchs 1 gelöst.

Bevorzugte Ausführungsformen sind Gegenstand der Unteransprüche.

In für sich genommen zunächst bekannter Weise umfasst die Parksperren-Notentriegelungseinrichtung für ein shift-by-wire-Gangwechselgetriebe gemäß der vorliegenden Erfindung eine mechanische Übertragungseinrichtung zwischen einer Notentriegelungsbetätigung und einem Getriebe zum Zweck der Notentriegelung der Parksperre. Dabei steht die Übertragungseinrichtung mit einer an einer Schaltwelle des Getriebes angeordneten Schwenkhebeleinrichtung in Eingriff.

Erfindungsgemäß zeichnet sich die Notentriegelungseinrichtung jedoch dadurch aus, dass die Schwenkhebeleinrichtung einen primären Schwenkhebel, einen sekundären Schwenkhebel sowie ein zwischen primärem und sekundärem Schwenkhebel in Betätigungsrichtung der Notentriegelung wirkendes unidirektionales Koppelglied aufweist.

Der primäre Schwenkhebel ist dabei mit der mechanischen Übertragungseinrichtung zwischen Notentriegelungsbetätigung und Getriebe verbunden, während der sekundäre Schwenkhebel mit der Schaltwelle bzw. mit dem Betätigungselement für die Parksperre des Getriebes verbunden ist. Das unidirektionale Koppelglied koppelt den primären und den sekundären Schwenkhebel im Fall der Betätigung des primären Schwenkhebels bezüglich der Hebel-Schwenkbewegung miteinander. Hingegen sind primärer und sekundärer Schwenkhebel bei Bewegungen lediglich des sekundären Schwenkhebels mittels in diesem Fall selbsttätiger Öffnung des Koppelglieds voneinander entkoppelt. Das unidirektionale Koppelglied wirkt mit anderen Worten ähnlich wie ein Freilauf mit Totgang dergestalt, dass die Betätigungsbewegung des primären Schwenkhebels unmittelbar auf den sekundären Schwenkhebel übertragen wird, während hingegen etwaige Bewegungen lediglich des sekundären Schwenkhebels innerhalb des Betätigungsbereichs des primären Schwenkhebels nicht zu einer Auslenkung des primären Schwenkhebels führen. Das unidirektionale Koppelglied wirkt somit nur in eine Richtung.

Auf diese Weise kann sich der mit dem Getriebe verbundene sekundäre Schwenkhebel - den Rotationen der Getriebeschaltwelle im Normalbetrieb des Getriebes folgend - innerhalb des Bewegungsbereichs des primären Schwenkhebels hin und her bewegen, ohne dass der primäre Schwenkhebel und die damit verbundene Übertragungseinrichtung von der Notentriegelungsbetätigung - also beispielsweise der Seilzug für die Notentriegelung der Parksperre - aus deren Ruhestellung ausgelenkt und mitbewegt werden. Somit werden unerwünschte Geräusche durch unnötige Bewegung der Übertragungseinrichtung unterbunden, ebenso unterliegt die nicht mitbewegte Übertragungseinrichtung einer reduzierten Abnutzung und reduzierten Korrosionsangriffen. Auch wird durch die definierte Verbindung zwischen der Übertragungseinrichtung und dem primären Schwenkhebel die Montage der Notentriegelungseinrichtung erleichtert und es lassen sich somit Fehler bei der Justage der Übertragungseinrichtung vermeiden.

Im Fall einer erforderlichen Notentriegelung der Parksperre jedoch wirkt das unidirektionale Koppelglied der Schwenkhebeleinrichtung in der gewünschten Weise koppelnd zwischen primärem und sekundärem Schwenkhebel, so dass die gewünschte Kraftübertragung, ausgehend von der mechanischen Übertragungseinrichtung - also beispielsweise vom Seilzug - auf den primären Schwenkhebel und von dort über das unidirektionale Koppelglied, den sekundären Schwenkhebel und die Getriebeschaltwelle auf die Einrichtung zur Deaktivierung der Parksperre im Getriebe erfolgen kann.

Die Erfindung sieht des weiteren vor, dass das unidirektionale Koppelglied als ein am sekundären Schwenkhebel angeordneter Anschlag für den primären Schwenkhebel, oder wahlweise als ein am primären Schwenkhebel angeordneter Anschlag für den sekundären Schwenkhebel ausgebildet ist. Auf diese Weise lässt sich das unidirektionale Koppelglied zwischen primärem und sekundärem Schwenkhebel besonders einfach, robust und kostengünstig ausbilden, Zumal am sekundären (bzw. am primären) Schwenkhebel eine Abkantung angeformt ist, an welcher der primäre (bzw. der sekundäre) Schwenkhebel im Fall der Notentriegelung, den sekundären Schwenkhebel mit dem primären Schwenkhebel mitbewegend, zur Anlage kommt.

Gemäß bevorzugter Ausführungsformen der Erfindung ist das unidirektionale Koppelglied zwischen primärem und sekundärem Schwenkhebel, bzw. der primäre Schwenkhebel relativ zum sekundären Schwenkhebel oder relativ zum Getriebegehäuse federbelastet. Dies führt dazu, dass auch die mechanische Übertragungseinrichtung bzw. der Seilzug zur Notentriegelungsbetätigung die im Hinblick auf Störungsfreiheit und Geräuschreduzierung wünschenswerte Vorspannung unabhängig davon erhält, in welcher Position die Getriebeschaltwelle und damit der sekundäre Schwenkhebel sich im Normalbetrieb des Getriebes momentan jeweils befinden. Eine solche Vorspannfeder für den primären Schwenkhebel und den Seilzug kann jedoch auch im Bereich der mechanischen Übertragungseinrichtung bzw. des Seilzugendes angeordnet sein, beispielsweise in Form einer Druckfeder.

Gemäß einer weiteren, besonders bevorzugten Ausführungsform der Erfindung sind primärer und sekundärer Schwenkhebel koaxial am Getriebegehäuse gelagert. Die koaxiale Lagerung von primärem und sekundärem Schwenkhebel reduziert den konstruktiven Aufwand und ermöglicht die gemeinsame Lagerung beider Schwenkhebel im Bereich der bzw. unmittelbar auf der Getriebeschaltwelle.

Vorzugsweise ist dabei die Feder des unidirektionalen Koppelglieds ebenfalls auf der gemeinsamen Lagerung von primärem und sekundärem Schwenkhebel angeordnet, also beispielsweise auf der Getriebeschaltwelle axial zwischen primärem und sekundärem Schwenkhebel.

Die Erfindung lässt sich unabhängig davon verwirklichen, wie das mechanische Übertragungselement zwischen dem Gangwechselgetriebe und der Notentriegelungsbetätigung ausgebildet ist. Gemäß einer bevorzugten Ausführungsform der Erfindung ist das Übertragungselement jedoch durch einen Seilzug gebildet. Der Seilzug lässt sich frei zwischen dem Getriebe und der Notentriegelungsbetätigung verlegen und weist zudem Vorteile bezüglich einer geringen Körperschallübertragung auf.

Im Folgenden wird die Erfindung anhand lediglich Ausführungsbeispiele darstellender Zeichnungen näher erläutert. Es zeigt:
- **Fig. 1**: in schematischer isometrischer Ansicht die Schwenkhebeleinrichtung einer Ausführungsform einer Notentriegelungseinrichtung gemäß der vorliegenden Erfindung, mit primärem und sekundärem Schwenkhebel in der Parksperrenstellung;
- **Fig. 2**: in einer **Fig. 1** entsprechenden Darstellung und Ansicht die Schwenkhebeleinrichtung gemäß **Fig. 1**, primärer und sekundärer Schwenkhebel bei aktivierter Notentriegelung; und
- **Fig. 3**: in einer **Fig. 1** und **2** entsprechenden Darstellung und Ansicht die Schwenkhebeleinrichtung gemäß **Fig. 1** und **2**, sekundärer Schwenkhebel in der Stellung bei geöffneter Parksperre im Normalbetrieb.

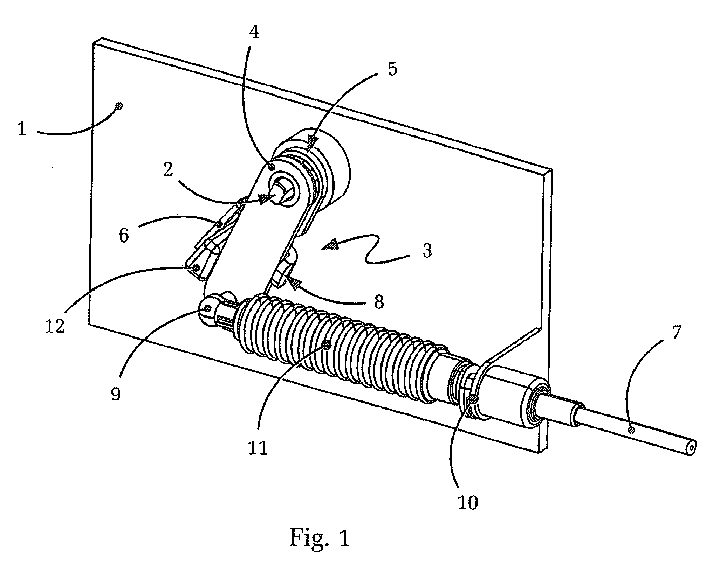

**Fig. 1** zeigt in schematisch ausgeführter isometrischer Darstellung die Schwenkhebeleinrichtung einer Ausführungsform für eine Notentriegelungseinrichtung gemäß der vorliegenden Erfindung.

Man erkennt zunächst einmal einen Ausschnitt aus der Wandung des Getriebegehäuses 1 sowie das nach außen überstehende Ende der das Getriebegehäuse 1 durchragenden Schaltwelle 2 des Getriebeautomaten. Ferner erkennbar wird die Schwenkhebeleinrichtung 3, die bei der dargestellten Ausführungsform aus dem primären Schwenkhebel 4, dem rotatorisch fest mit der Getriebeschaltwelle 2 verbundenen sekundären Schwenkhebel 5, sowie einer axial zwischen primärem 4 und sekundärem Schwenkhebel 5 angeordneten Schenkelfeder 6 besteht. Dabei ist der primäre Schwenkhebel 4 koaxial mit dem sekundären Schwenkhebel 5 gelagert, jedoch für sich genommen zunächst einmal frei gegenüber der Getriebeschaltwelle 2 sowie gegenüber dem sekundären Schwenkhebel 5 rolierbar.

Der primäre Schwenkhebel 4 ist mit der einen Seil- bzw. Bowdenzug 7 umfassenden Notentriegelungs-Übertragungseinrichtung zwischen der (nicht dargestellten) Notentriegelungsbetätigung im Kraftfahrzeuginnenraum und dem Getriebe 1 gekoppelt. Primärer Schwenkhebel 4 und sekundärer Schwenkhebel 5 sind überdies miteinander gekoppelt durch das Koppelglied 8, das bei der dargestellten Ausführungsform durch eine am sekundären Schwenkhebel 5 angeordnete Abkantung 8 gebildet ist. Hierdurch verschwenkt der primäre Schwenkhebel 4 bei einer Rotation gegen den Uhrzeigersinn - über das durch die Abkantung 8 gebildete Koppelglied - auch den sekundären Schwenkhebel 5 und damit die Getriebeschaltwelle 2, mit der der sekundäre Schwenkhebel 5 fest verbunden ist.

Hingegen führt eine Rotation des sekundären Schwenkhebels 5, ausgehend von der in Fig. 1 dargestellten Position, gegen den Uhrzeigersinn (und zurück) nicht zu einer Mitnahme des primären Schwenkhebels 4 durch die Getriebeschaltwelle 2 und den sekundären Schwenkhebel 5.

Seilzug 7 und primärer Schwenkhebel 4 sind bei der dargestellten Ausführungsform dabei mittels eines Kugelkopfs 9 miteinander verbunden, wobei der Kugelkopf 9 auf das Ende des Zugseils des Seilzugs 7 aufgepresst ist. Zum Schutz gegen Verschmutzungen und Umgebungsmedien ist das offen verlaufende Ende des Zugseils des Seilzugs 7 zwischen Kugelkopf 9 und Seilzug-Gegenhalter 10 mittels eines längenveränderlichen Elastomer-Dichtungsbalgs 11 geschützt. Diese feste Verbindung zwischen Seilzug 7 und primärem Schwenkhebel 4 mittels des Kugelkopfs 9 ist auch vorteilhaft insofern, als durch diese definierte Verbindung bei der Montage des Seilzugs 7 der Justageaufwand verringert und Montagefehler vermieden werden können.

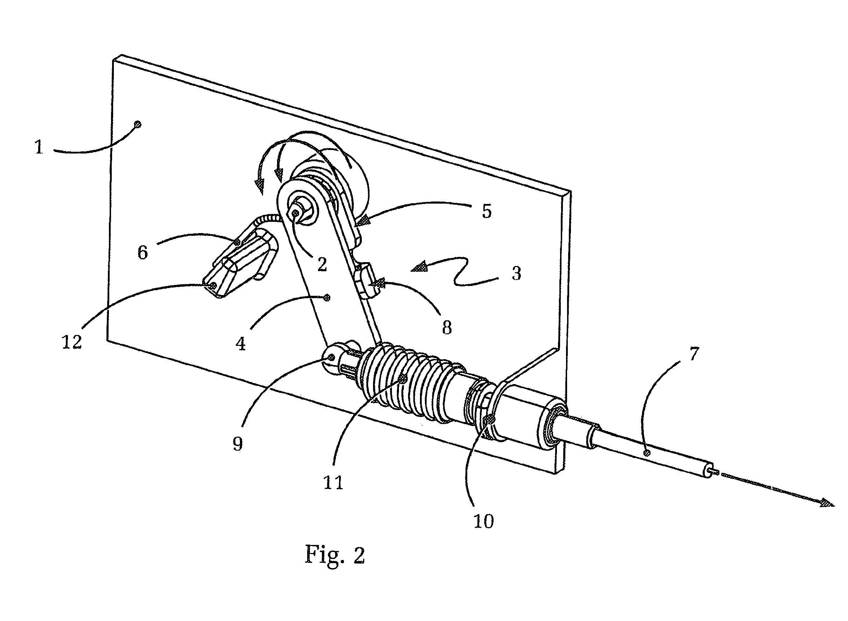

Die Mitnahme des sekundären Schwenkhebels 5 durch den primären Schwenkhebel 4 bei manueller Notentriegelung der Parksperre mittels der Notentriegelungsbetätigung über das Übertragungselement 7 ist in **Fig. 2** dargestellt. Man erkennt, wie die manuelle Notentriegelung der Parksperre im Getriebe über die Wirkungskette ""Notentriegelungsbelätigung (nicht dargestellt), Seilzug 7, Kugelkopf 9, primärer Schwenkhebel 4, Koppelglied 8, sekundärer Schwenkhebel 5, Getriebeschaltwelle 2"" zur Betätigung der Getriebeschaltwelle 2 und damit zur gewünschten manuellen Deaktivierung der Parksperre im Getriebe führt. Soll die Parksperre manuell wieder aktiviert werden, so wird durch entsprechendes Lösen der (nicht dargestellten) Notentriegelungsbetätigung der Seilzug 7 wieder nachgelassen. Hierdurch wird der primäre Schwenkhebel 4 durch die Schenkelfeder 6 wieder in seine Ausgangsstellung gemäß **Fig. 1** zurückgeschwenkt, während der sekundäre Schwenkhebel 5 aufgrund eigener Federbelastung durch eine im Getriebe 1 auf der Schaltwelle 2 angeordnete (nicht dargestellte) Feder ebenfalls in seine Grundstellung gemäß **Fig. 1** zurückfällt, wodurch die Parksperre wieder eingelegt wird.

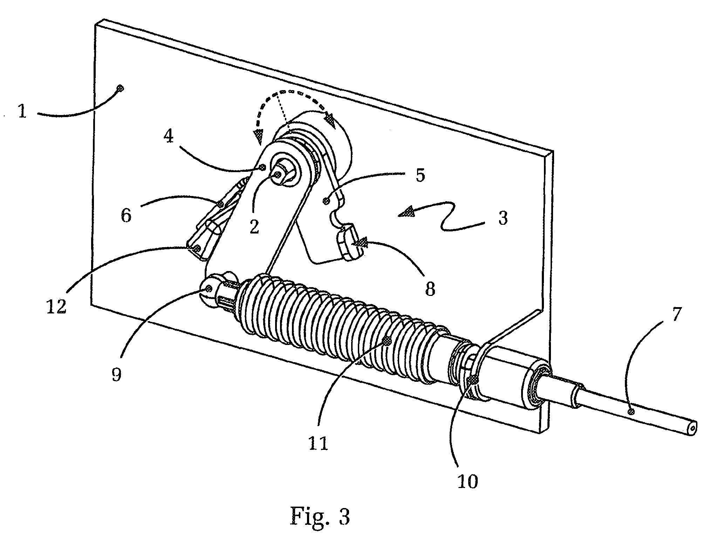

In **Fig. 3** ist die Wirkung des unidirektionalen Koppelglieds 8 im Normalbetrieb des Getriebes - beispielsweise während der Fahrt des Kraftfahrzeugs - dargestellt. In diesem Fall befindet sich die Einrichtung zur Notentriegelung der Parksperre mit den zugehörigen Komponenten Seilzug 7 und primärer Schwenkhebel 4 am Gehäuseanschlag 12 in der Ruhestellung - wie auch gemäß **Fig. 1** - während der sekundäre Schwenkhebel 5 den bei Schaltvorgängen des Automatikgetriebes auftretenden selbsttätigen Rotationen der Getriebeschaltwelle 2 folgen kann (angedeutet durch den strichlierten Pfeil), ohne dass dies auf die Notentriegelungseinrichtung, insbesondere auf den Seilzug 7 rückwirken würde.

Dabei wird der primäre Schwenkhebel 4 wie auch der Seilzug 7 durch die Schenkelfeder 6 in der Ruhestellung am Gehäuseanschlag 12 gehalten, wodurch gleichzeitig auch der Seilzug 7 die zu seiner ordnungsgemäßen Funktion und zur Unterbindung unerwünschter Geräusche erforderliche Vorspannung erhält.

Im Ergebnis wird somit deutlich, dass durch die Erfindung eine Parksperren-Notentriegelungseinrichtung geschaffen wird, die Vorteile insbesondere bezüglich einer reduzierten Korrosionsanfälligkeit, reduzierten Abnutzung und einer geringeren Geräuschentwicklung aufweist. Ferner lassen sich Erleichterungen bei der Montage der Übertragungseinrichtung bzw. des Seilzugs erzielen und Justagefehler vermeiden. Die erfindungsgemäße Notentriegelungseinrichtung ist zudem robust, potentiell langlebig und kostengünstig realisierbar. Bei anderen aus dem Stand der Technik bekannten Lösungen erforderliche separate Vorspanneinrichtungen für den Seilzug der Parksperren-Notentriegelung können entfallen, da diese Funktion in die Schwenkhebeleinrichtung der erfindungsgemäßen Notentriegelungseinrichtung integriert werden kann.

Die Erfindung leistet somit einen Beitrag zur Verbesserung der Betriebssicherheit, Kosteneffektivität, Lebensdauer und Montagefreundlichkeit mechanischer Notentriegelungsvorrichtungen für Parksperren an Automatikgetrieben.

### Bezugszeichenliste

- 1: Getriebegehäuse
- 2: Schaltwelle
- 3: Schwenkhebeleinrichtung
- 4: Primärer Schwenkhebel
- 5: Sekundärer Schwenkhebel
- 6: Schenkelfeder
- 7: Seilzug
- 8: Koppelglied, Abkantung
- 9: Kugelkopf
- 10: Gegenhalter
- 11: Dichtungsbalg
- 12: Gehäuseanschlag

## Patentansprüche

1. Notentriegelungseinrichtung zur manuellen Betätigung der Parksperre eines shift-by-wire-Gangwechselgetriebes, umfassend eine mechanische Übertragungseinrichtung (7) zwischen einer Notentriegelungsbetätigung und dem Getriebe (1), wobei die Übertragungseinrichtung (7) mit einer an einer Schaltwelle (2) des Getriebes (1) angeordneten Schwenkhebeleinrichtung (3) in Eingriff steht,
**dadurch gekennzeichnet,**
**dass** die Schwenkhebeleinrichtung (3) einen mit der Übertragungseinrichtung (7) verbundenen primären Schwenkhebel (4) und einen mit der Schaltwelle (2) verbundenen, den Rotationen der Schaltwelle (2) in einem Normalbetrieb des Getriebes (1) folgenden sekundären Schwenkhebel (5) sowie ein zwischen primärem (4) und sekundärem Schwenkhebel (5) in Betätigungsrichtung der Notentriegelung wirkendes unidirektionales Koppelglied (8) umfasst, wobei das unidirektionale Koppelglied (8) als eine am sekundären Schwenkhebel (5) oder am primären Schwenkhebel (4) angeformte, als Anschlag wirkende Abkantung (8) ausgebildet ist, an welcher der jeweils andere Schwenkhebel (4; 5) zur Anlage *bringbar ist, wobei der primäre Schwenkhebel (4) und der sekundäre Schwenkhebel (5) bei Betätigung des primären Schwenkhebels (4) mittels des unidirektionalen Koppelglieds (8) miteinander gekoppelt sind, während der primäre Schwenkhebel (4) und der sekundäre Schwenkhebel (5) bei Bewegungen des sekundären Schwenkhebels (5) voneinander entkoppelt sind.

2. Notentriegelungseinrichtung nach Anspruch **1**,
**dadurch gekennzeichnet,**
**dass** das unidirektionale Koppelglied (8) mittels einer Feder (6) unter Vorspannung steht.

3. Notentriegelungseinrichtung nach Anspruch 1 oder 2,
**dadurch gekennzeichnet,**
**dass** der primäre Schwenkhebel (4) relativ zum sekundären Schwenkhebel (5) oder relativ zum Getriebegehäuse (1) mittels einer Feder (6) unter Vorspannung steht.

4. Notentriegelungseinrichtung nach einem der Ansprüche 1 bis 3,
**dadurch gekennzeichnet,**
**dass** primärer (4) und sekundärer Schwenkhebel (5) koaxial gelagert sind.

5. Notentriegelungseinrichtung nach Anspruch 4,
**dadurch gekennzeichnet,**
**dass** die Feder (6) auf der gemeinsamen Lagerung von primärem (4) und sekundärem Schwenkhebel (5) angeordnet ist.

6. Notentriegelungseinrichtung nach einem der Ansprüche 1 bis 5,
**dadurch gekennzeichnet,**
**dass** das Übertragungselement (7) ein Seilzug ist.

## Claims

1. Emergency unlocking device for manually actuating the parking lock of a shift-by-wire change speed gearbox, comprising a mechanical transmission device (7) between an emergency unlocking actuation means and the gearbox (1), wherein the transmission device (7) is in engagement with a pivot lever device (3) arranged on a shift shaft (2) of the gearbox (1),
**characterized**
**in that** the pivot lever device (3) comprises a primary pivot lever (4), which is connected to the transmission device (7), and a secondary pivot lever (5), which is connected to the shift shaft (2) and which follows the rotations of the shift shaft (2) during normal operation of the gearbox (1), and a unidirectional coupling element (8) which acts between the primary (4) and secondary pivot lever (5) in the actuation direction of the emergency unlocking means, wherein the unidirectional coupling element (8) is formed as a bent portion (8) which is integrally formed on the secondary pivot lever (5) or on the primary pivot lever (4) and which acts as a stop, with which bent portion the in each case other pivot lever (4; 5) can be placed in contact, wherein the primary pivot lever (4) and the secondary pivot lever (5) are coupled to one another by means of the unidirectional coupling element (8) during actuation of the primary pivot lever (4), whereas the primary pivot lever (4) and the secondary pivot lever (5) are decoupled from one another during movements of the secondary pivot lever (5).

2. Emergency unlocking device according to Claim 1, **characterized**
**in that** the unidirectional coupling element (8) is preloaded by means of a spring (6).

3. Emergency unlocking device according to Claim 1 or 2,
**characterized**
**in that** the primary pivot lever (4) is preloaded relative to the secondary pivot lever (5) or relative to the gearbox housing (1) by means of a spring (6).

4. Emergency unlocking device according to one of Claims 1 to 3,
**characterized**
**in that** the primary (4) and secondary pivot levers (5) are mounted coaxially.

5. Emergency unlocking device according to Claim 4, **characterized**
**in that** the spring (6) is arranged on the common mounting of the primary (4) and secondary pivot levers (5).

6. Emergency unlocking device according to one of Claims 1 to 5,
**characterized**
**in that** the transmission element (7) is a cable pull.

## Revendications

1. Dispositif de déverrouillage d'urgence pour l'actionnement manuel du mécanisme de verrouillage de stationnement d'une transmission à changement de vitesses à commande électronique (« shift-by-wire »), comportant un dispositif de transmission mécanique (7) entre un actionnement de déverrouillage d'urgence et la transmission (1), le dispositif de transmission (7) étant en prise avec un dispositif à leviers pivotants (3) disposé sur un arbre de changement de vitesses (2) de la transmission (1),
**caractérisé en ce que**
le dispositif à leviers pivotants (3) comporte un levier pivotant primaire (4) relié au dispositif de transmission (7), un levier pivotant secondaire (5) qui est relié à l'arbre de changement de vitesses (2) et qui suit les rotations de l'arbre de changement de vitesses (2) en fonctionnement normal de la transmission (1), ainsi qu'un organe d'accouplement unidirectionnel (8) agissant entre le levier pivotant primaire (4) et le levier pivotant secondaire (5) dans la direction d'actionnement du déverrouillage d'urgence, l'organe d'accouplement unidirectionnel (8) étant réalisé en tant que rebord (8) agissant en tant que butée et formé sur le levier pivotant secondaire (5) ou sur le levier pivotant primaire (4), contre lequel rebord l'autre levier pivotant (4 ; 5) respectif peut être amené en appui, le levier pivotant primaire (4) et le levier pivotant secondaire (5) étant accouplés l'un à l'autre au moyen de l'organe d'accouplement unidirectionnel (8) lors de l'actionnement du levier pivotant primaire (4), tandis que le levier pivotant primaire (4) et le levier pivotant secondaire (5) sont désaccouplés l'un de l'autre lors de déplacements du levier pivotant secondaire (5).

2. Dispositif de déverrouillage d'urgence selon la revendication 1,
**caractérisé en ce que**
l'organe d'accouplement unidirectionnel (8) est soumis à une précontrainte au moyen d'un ressort (6).

3. Dispositif de déverrouillage d'urgence selon la revendication 1 ou 2,
**caractérisé en ce que**
le levier pivotant primaire (4) est soumis, au moyen d'un ressort (6), à une précontrainte par rapport au levier pivotant secondaire (5) ou par rapport au boîtier de transmission (1).

4. Dispositif de déverrouillage d'urgence selon l'une quelconque des revendications 1 à 3,
**caractérisé en ce que**
le levier pivotant primaire (4) et le levier pivotant secondaire (5) sont montés de manière coaxiale.

5. Dispositif de déverrouillage d'urgence selon la revendication 4,
**caractérisé en ce que**
le ressort (6) est disposé sur le support commun du levier pivotant primaire (4) et du levier pivotant secondaire (5).

6. Dispositif de déverrouillage d'urgence selon l'une quelconque des revendications 1 à 5,
**caractérisé en ce que**
l'élément de transmission (7) est un câble Bowden.
